# EUROPEAN PATENT APPLICATION

(11) **EP 1 316 413 A1**
(43) Date of publication of application: **04.06.2003**
(21) Application number: 01128618.4
(22) Date of filing: 30.11.2001
(51) Int. Cl.: B32B 1/08, B32B 3/02, B32B 29/00, B32B 5/00, A47L 13/18

(54) **Flexible cleaning article**

(71) Applicant: SCA Hygiene Products GmbH, 68264 Mannheim (DE)
(72) Inventor: Grösgen, Beatrix, 83022 Rosenheim (DE); Reichling, Bernhard, 67346 Speyer (DE)
(74) Representative: Harrison, Michael Charles

(57) **Abstract**

Flexible cleaning article (1), including two outer portions (3,4) of tissue paper and/or non-woven material, the outer portions (3,4) having mutually differing surface properties. The two outer portions (3,4) are joined to one another and formed into a hollow structure by suitable joining, so as to provide the user with a tubular cleaning article having two or more different cleaning surfaces.

## Description

### Field of the invention:

The present invention relates to flexible cleaning articles having at least two material sections making up its outer surface, wherein the material sections have differing external material properties and wherein at least one of the sections consists of tissue paper and/or a nonwoven material. In particular, the invention relates to disposable cleaning articles which comprise two or more outer sections of non-woven material or tissue paper.

### Background to the invention:

Tissue paper concerns products which are made from lightweight, dry creped and/or noncreped paper such as toilet paper, kitchen towels, handkerchiefs, and other wiping papers such as facials, napkins, hand towels and wipes. Tissue paper products derive from a oneply, semi-finished, wet laid tissue base paper, that is predominantly composed of natural fibres. These so-called wet-laid papers are the result of a sheet forming process based on forming the fibrous structure in water. The tissue paper ply if often combined with other plies so as to form multiple-ply tissue paper.

Nonwoven material refers to somewhat textile-like material made of fibres which are bound together without weaving. Examples of nonwoven materials are spunbonded layers, melt-blown layers or thermobonded layers, whereby heat may be the binder between the fibres, although needling, chemical bonding or other bonding techniques are also possible.

Cleaning articles of the aforementioned type are known in the form of cleaning cloths or wipes. These may have one side which is of a different material or a different surface material to the other side. In this way, the cloth can be picked up and applied to a surface of the object to be cleaned such that only one of the sides is in contact with the object. Accordingly, the specific material properties of that particular side of the cloth can be used.

An example of a tissue paper article formed for example from a multiple tissue ply structure, which has different surface properties on either side of the multiple ply structure is known for example from US-A-5 906 711.

Such a two-sided cleaning article however has several disadvantages from a consumer point of view. For example, when it is desired to use the cloth, the user must pick up the cloth and hold it in a manner such that the user's hand contacts one or both of the cloth surfaces. Thus, as soon as the cloth section being used for cleaning becomes dirty or wet or coated in a cleaning agent, there is a risk that the user's hand will come into contact with that section which was used for cleaning, and the person's hand may either become dirty and/or wet and/or be exposed to the cleaning agent. This problem is of course worsened when using the reverse side of the cloth for cleaning, when it becomes unavoidable to touch the soiled surface. To avoid this problem, users often wear rubber gloves which however themselves have certain other disadvantages such as being difficult to fit due to the high friction forces produced against the skin.

Similarly, if one surface of the cloth being used is abrasive and the other not, the user may simply damage their skin when holding the abrasive side of the cloth and cleaning using the other side.

### Summary of the invention:

The invention seeks to overcome the aforementioned and other drawbacks, by providing a flexible cleaning article having the features defined in claim 1. Preferred features of the invention are defined in the dependent claims.

In accordance with the invention, the cleaning article has at least two material sections, which are joined in such a way that the article is given an at least partly tubular structure, or in other words a "hollow" structure. This will give the structure a substantially continuous or entirely continuous outer surface encompassing the hollow space, allowing the user to insert the fingers of one hand, or the whole of a hand, inside the thus formed hollow article, thereby obviating the need to grasp the outer surface of the article during cleaning.

The term "material section" as used herein embraces a web or layer of material which may consist of one or more plies (usually of the same material type) joined together as a single web or layer. Similarly, the expression "tubular structure" is not intended to include tubular apertures or pores formed on a micro or macro scale, such as are formed between two plies of a single layer, but is to be understood as being on a scale commensurate with the size of the product. Thus, where the article relates to a glove for example, the tubular structure is formed either by the hand and/or finger portions thereof.

In certain embodiments, the material sections may each consist of the same material components in the constituent webs or layers, as long as they have mutually differing external material properties. For example, if a single material comprising a two-ply web presenting different properties on either side of the web is used, the material sections in the article of the invention may be formed by the top ply being outermost in one section and the top ply being innermost in another section.

In some cases, it is advantageous if the sensation of wetness and/or the actual transfer of liquids and other substances through the structure of the cleaning article from the external cleaning surface to the hand is avoided. To this end, a preferred embodiment of the invention provides the article with an inner layer, which layer is made liquid-impermeable in some manner. This may be effected merely by treatment of the inner side of the tissue paper section(s) and/or the nonwoven material section(s) of the article, or by the use of a separate inner layer of tissue paper, or a separate inner layer of nonwoven material, which has been treated to be impermeable, or more preferably by the use of a liquid-impermeable polymeric film such as a continuous PE film of the type used for disposable diaper backings for example. If a separate impermeable layer is used, the layer can be attached by using adhesive or by attaching the tissue paper (and/or the nonwoven layer) and the impermeable layer together. Where a film of polymeric material is used, the tissue paper layer (and/or the nonwoven layer) and the film layer may be attached together preferably by using either adhesive or welding or both.

While the tubular structure of the article need only be made sufficiently long and wide enough for insertion of only some of the fingers of one hand, the tubular structure may be made large enough so as to be able to accommodate all the fingers of one hand, or more preferably the entire hand (either with or without the provision of special finger-receiving cavities). In this way, the user can select whether they use a glove-type arrangement or a mitten-type arrangement or simply an open or closed hose structure. In particular, the option of an open hose structure allows a long hose piece to be manufactured (e.g. more than half a metre and preferably several metres in length), from which the user may cut arbitrary shorter lengths of hose appropriate for their needs, without predetermined article lengths having to be provided.

### Brief description of the Figures:

The invention will now be described with reference to the accompanying drawings depicting certain non-limiting embodiments of the invention, in which:
Fig. 1 shows a perspective view of an article in accordance with a first embodiment of the invention in the form of an open-ended hose,
Fig. 2 shows a plan view of the article in Fig. 1, with a hand inserted into the hose,
Fig. 2A shows a sectional view of the article in Fig. 2 taken along line IIA-IIA, wherein the hand is not shown,
Fig. 3 shows a plan view of an article in accordance with a further embodiment of the invention, similar to that in Fig. 2 but with one end shut, and further having an impermeable liner,
Fig. 3A shows a sectional view of the article in Fig. 3 taken along the line IIIA-IIIA in Fig. 3,
Fig. 4 shows a plan view of an article in accordance with a still further embodiment of the invention, having the form of a mitten with one finger-receiving portion,
Fig. 5 shows a plan view of an article similar to Fig. 4 with a different construction,
Fig. 6 shows a plan view of an article in accordance with a still further embodiment of the invention in the form of a glove, and
Fig. 7 shows a still further embodiment of the invention comprising three material sections.

### Detailed description of preferred embodiments:

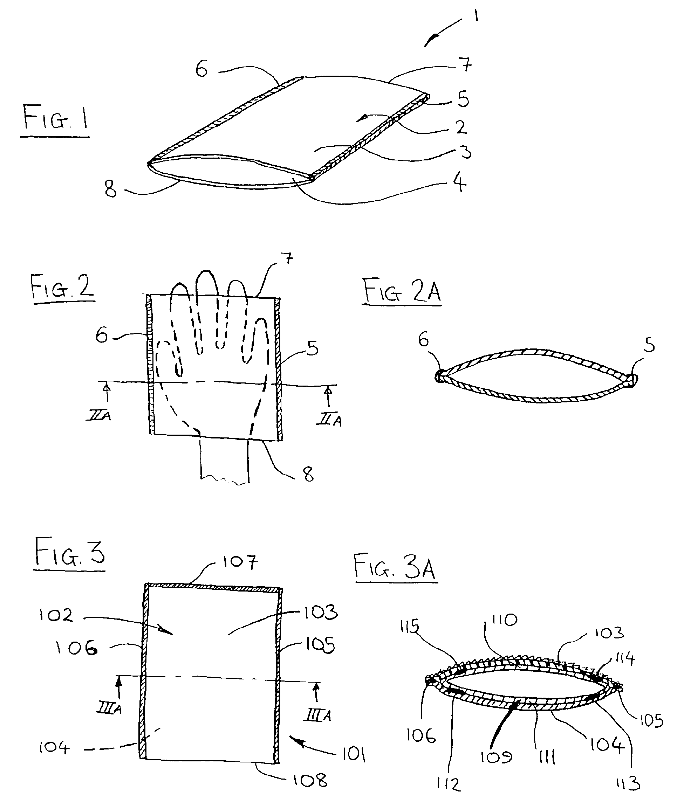

The cleaning article 1 in Fig. 1 comprises a flattened tube with an outer surface 2 extending continuously in the form of a hose having open ends 7 and 8 and closed longitudinal side edges. The article 1 has however been opened out slightly into an oval form corresponding typically to its form when in use, for purposes of illustration.

The article comprises a first material section 3 and a second material section 4 together forming the outer surface 2, whereby the sections are joined at their longitudinal side edges by seams 5 and 6. First material section 3 has different external surface properties to those of second material section 4. Typically such different properties will be achieved by each material section 3, 4 comprising a different nonwoven material and/or a different tissue paper material. Only one of the material sections 3 and 4 need comprise a nonwoven material or tissue paper material, but typically all sections will comprise a nonwoven material and/or tissue paper material. In some examples, at least one nonwoven material and at least one tissue paper material will be used to form the different sections of the article. In many cases it may however be preferable if all sections are only of tissue paper material or if all sections are only of nonwoven material, the external properties of each section being different to one another.

It will be appreciated that while only two sections have been shown in Fig. 1, the outer surface 2 may comprise more than two sections, possibly either three or four sections. However, the inclusion of more than two sections makes the article less easy to use, since it becomes more difficult to ensure that only the appropriate cleaning section comes into contact with the surface to be cleaned. Whichever number of sections is used, these sections will preferably be arranged to cover an approximately equal surface area of the article. Thus, if two sections are used (as in Fig.1), it is preferable that each section covers substantially half the surface area of the article, although this is not essential. For reasons of manufacture of the seams 5, 6 or finger portions (if any are present) or the like, it may also be suitable to include an additional material section in the outer surface 2, which additional material section then need only be very narrow.

Seams 5 and 6 may be constituted by extra pieces of material as shown in Fig. 2A, whereby the pieces of material are adhered and/or welded, and/or needled, and/or sewn or otherwise attached, to the inner or outer sides of the longitudinal edge portions of the material sections 3, 4.

As can be seen in Figs. 1, 2 and 2A, the article has a tubular structure due to the seam 5, 6 attachment along the edge margins, which allows a hand to be inserted into the article as shown by the dashed lines in Fig. 2.

The hose length (i.e. from end 7 to end 8) has been chosen to allow a hand to be inserted, but not to be entirely covered. However, the hose length may be varied and different hand sizes will of course be covered to a differing degree for any one size of article 1, although a suitable length may be between about 8 and 12 cm. It is nevertheless possible to use an article which is much shorter i.e. between about 3 and 7 cm, and which might then only be long enough to cover the fingers, or part of the fingers, of a person's hand.

As will be apparent, the hose-like cleaning article of Figs. 1, 2 and 2A can be manufactured in an extremely long continuous length e.g. many metres in length. This then allows any desired length of cleaning article to be cut from the continuous article (with a pair of scissors for example). In this way the user can select the length of article required for the particular use concerned. This has the advantage that the long hose-like article can be rolled or otherwise stored in a compact manner. Perforations may alternatively be provided so as to delimit predetermined lengths of cleaning article, whereby separate cleaning articles may be obtained by breaking the perforations (e.g. by pulling). The articles are thus easily suitable for use with dispensers of various types.

Additionally, the ends 7 or 8 can be cut to any shape which the user desires, while still maintaining the tubular structure.

The article of Figs. 1, 2 and 2A has, like those in Figs. 3 to 6 (to be described below), two major surfaces, whereby each of the major surfaces consists of one material section in the article of the invention.

The sections 3, 4 have mutually different material properties. Where the article is to be used in the kitchen for example, it may be suitable to have a first section 3 which is intended primarily for the absorption of oil (e.g. cooking oil) or other oil-based products, whilst a second section 4 may also be made suitable for the absorption of water or other aqueous based solutions or mixtures, such as milk or fruit juices. Both surfaces will thus be oil-absorbent, whilst only one of the surfaces need be water-absorbent in addition. In this way, the user simply needs to put the cleaning article on to one hand and can use one section for wiping up water (possibly with oil or fat emulsions therein) and another for wiping up cooking oil or grease. Alternatively both surfaces could be used to wipe up oil or grease, despite the fact that one surface is designed for water absorption. Alternatively, each section may present an outer surface which may present some water absorbency, but the water and/or oil absorbency must be different between the sections so that the cleaning article can perform its double function.

Nonwoven webs, tissue paper webs and nonwoven fabrics which have certain external material properties as a result of their structures and which are thus adapted for specific uses are known per se in the art.

A further possibility to those mentioned above for the material sections may be that one section has a surface which is soft and smooth whilst another section has a tough and rough/abrasive surface. A typical use for this might be in using the abrasive section when cleaning dirt or residues from ceramic tiles in a bathroom (since such tiles are relatively scratch-proof), but using the soft and smooth section for wiping a plastic bath or mirrors or the like which may become dulled if subject to an abrasive surface.

The modification of surface properties of tissue products is also known in the art. For example, it is known from e.g. the aforementioned US-A-5 906 711 to provide a wetformed multiple ply tissue web, wherein the single web consists of two or more plies. One of the surfaces of the web can provide a smooth surface as a result of the ply structure used on that respective surface whilst the other surface can be made with relatively highly textured outward-facing protrusions in the form of domes to thereby form an abrasive surface. In the present invention, such properties of the same web can be used by forming one material section with the highly textured surface of the web facing outwards and joined at edges thereof to another material section with the smooth surface of the web facing outwards.

A further way of producing a material section with a relatively rough outer surface is to include polymeric fibres (e.g. thermoplastic staple fibres) into the material section, or to construct the web as a nonwoven material made entirely of polymeric fibres (e.g. a web of melt-blown thermoplastic staple fibres consisting of polyolefins such as PP or PE, polyesters or polyamides, or blends and copolymers of such materials, with or without surface treatments to provide hydrophilic properties).

Another embodiment of the invention is shown in Figs. 3 and 3A, whereby similar reference numerals as used in Figs. 1, 2 and 2A have been used but raised by 100 to denote similar features.

The article 101 is in the form a bag or in other words a closed-end hose, having a relatively rough abrasive section 103, a relatively smooth soft section 104, an open end 108 and a closed end 107. As with the aforegoing embodiment, the length may be chosen suitably to enclose a whole hand up to or beyond the wrist (e.g. between 18 and 24 cm in length and 9 to 14 cm in width). It may also be made longer or shorter.

In terms of the expressions "relatively soft" and "relatively smooth" as used herein, it will be appreciated by the skilled reader that exact values are not really appropriate to specify softness and roughness. However it should be understood that the different sections of the article are to be seen as providing soft and rough properties in respect to each other by a difference in their surface structure resulting from the manufacture of their respective surfaces. Thus as also with all embodiments, the external material properties are to be understood as those properties which exist after manufacture, i.e. the specific properties given to the material sections before the article is used or soiled in any way.

One or more of the seams 105, 106 and 107 can be constituted by lines of adhesive. One, more or all of the seams may instead/additionally be constituted by mechanical bonding, sealing, or any other bonding method known in the art. In one embodiment, the seams 105, 106 and 107 may lie, for example, between the two sections 103 and 104 at the outer edges of same.

Underlying the sections 103 and 104 in the embodiment shown, there is a liquid-impermeable layer 109. The layer 109 may comprise a polymeric film or a porous structure such as a non-permeable tissue web or foam, or layer 109 may simply be a coating applied to the inner surface of section 103 and/or 104, or be a treatment of part of the sections 103 and 104. The layer 109 may also be applied to only one, or only some of the sections, such as in the case where only one section has a permeable structure. An inner layer such as layer 109 may also be applied to other embodiments of the invention in any of these ways.

The layer 109 has an upper surface 110 and a lower surface 111 each connected, by adhesive or hot sealing or the like, to the article surface layer 102 at joining locations 112, 113, 114 and 115 as can be seen in Fig. 3A. Additional or alternative attachment locations may also be used of course, such as an additional attachment in the seams 105, 106 or an attachment only in the seams 105, 106.

By use of an inner impermeable layer 109, the user's skin will be protected from contact with any substances transferred from the outer surface of section 103, 104 through to the inner side of the article. This is of particular advantage when using cleaning agents, since these are often the cause of dermatitis or allergic skin reactions of various types.

An arrangement with an inner polymeric film layer can be produced both easily and economically, and thus provides no real obstacle to the articles being disposable, since PE sheets for example can be produced in large volumes at very low prices. For recycling purposes, the inner layer 109 can be made with attachments 112 - 115 which are readily breakable when pulled hard so as to allow ready removal of the inner polymeric film from the outer sections. In a further embodiment, the inner layer 109 may consist of a degradable polymer (e.g. a lactic-acid based polymer).

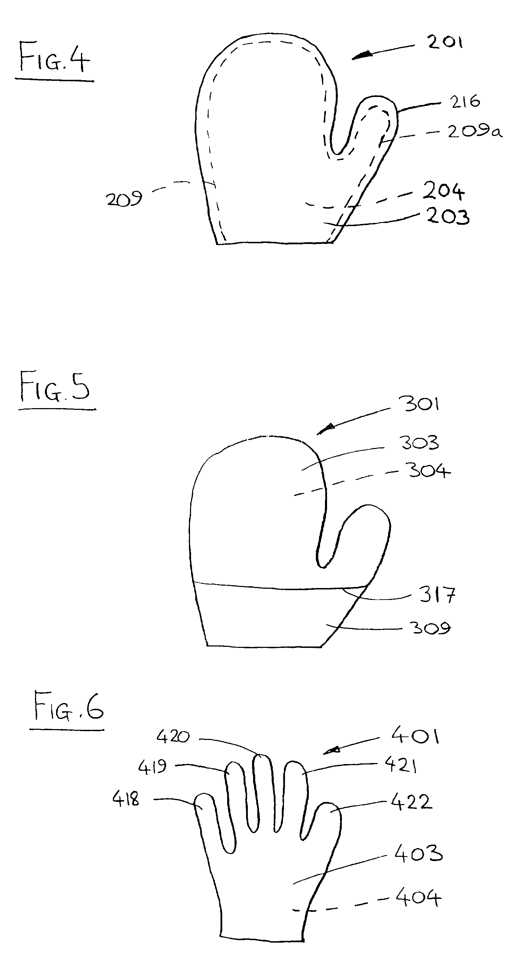

Fig. 4 shows a further embodiment of the invention, somewhat similar to that in Fig. 3 and 3A, but in which the article 201 has the general form of a mitten allowing a thumb to be inserted into a receiving portion 216. In this embodiment, the side 203 constitutes a first section and side 204 a further section, each section occupying substantially half of the surface area of the mitten. The sections 203, 204 have mutually different external (surface) material properties such that each side is suitable for a particular use. The mitten may also be provided with a liquid-impermeable inner layer 209 similar to layer 109 additionally provided with a thumb receiving portion 209a. The layer 209 thereby itself also has the form of an impermeable mitten and is attached to the section 203 and/or 204. However, the layer 209 may be omitted partly or entirely if desired. For example, it may be suitable that only the hand part and not the thumb receiving portion has an underlying impermeable layer 209.

The mitten can be worn either way round on the same hand whereby the small finger may be placed inside the portion 209a instead of the thumb, or vice versa.

In the embodiment of Fig. 5, an article 301 is depicted in which the first and second sections 303, 304 do not extend the entire length of the article, but instead are only present on part of the surface of the mitten, namely the portion covering the finger section of the article. The sections 303 and 304 thus each have their lower edge positioned as shown by line 317. The inner impermeable layer 309 however has been left the same length and thus extends to the same length as shown in Fig. 4, although the layer 309 may be arranged to end at, or upwards of, line 317. The Fig. 5 embodiment may be preferred in some situations to that shown in Fig. 4 since material is saved due to the shorter length of sections 303 and 304. At the same time, the useful surface area is maximised for the cleaning function, since the portion of the article extending from line 317 down to the wrist would generally not be used very often.

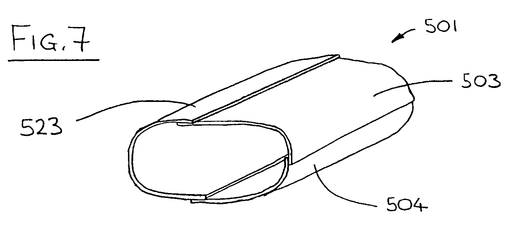

In the embodiment of Fig. 6, the article 401 is in the form of a glove comprising five finger receiving portions 418 - 422. However it will be apparent to a skilled person that less than five finger-receiving portions may be used, as long as receiving portions are provided which are large enough for receiving all the fingers. For example, only three finger-receiving portions might be provided, two of which portions could be arranged to receive two fingers. Again this has the advantage of a reduced overall surface area, since the unused surface of the finger portions which lies between adjacent finger portions is omitted and thus cost is reduced.

In the embodiment of Fig. 7, a cleaning article 501 comprises three sections 503, 504, 523, each of which sections is joined to the other two sections along its outer edges. Joining may be effected by any suitable means, although the use of adhesive or welding are the most suitable when the articles of the invention are made to be disposable articles.

Although Fig. 7 shows a large "step" at the transition between each section, it will be appreciated that the Figure is not drawn to scale due to reasons of clarity and that the sections would normally have a very low thickness, such that those transitions would be barely discernible.

Although three sections 503, 504, 523 have been shown in Fig. 7, it should be clear that further sections may be used. However, in order to provide a useful surface area of a section which, when in use, will not cause the surface being cleaned to be in simultaneous contact with another section, three sections is generally the preferred maximum. Three sections may be suitable for example where one section is abrasive and not very absorbent, another is very absorbent, and a third is very soft and smooth (e.g. for polishing purposes). An inner impermeable layer as described previously with respect to layer 109 may be added to one or more of the sections 503, 504, 523 if desired.

As will be understood from the aforegoing, the cleaning article of the invention is highly versatile and provides the consumer with several different cleaning surfaces (i.e. one cleaning surface for each section), thus allowing multiple wipes or cloths to be avoided and a time saving compared to first finding and then swapping various cloths being used.

In order to simplify the identification of the correct section for use, the individual material sections may be individually marked with words describing their characteristic such as "polishing" or "abrasive" or "water absorbent", etc.

## Claims

1. Flexible cleaning article (1; 101; 201; 301; 401; 501), comprising an outer surface (2; 102) including at least two material sections (3, 4; 103, 104; 203, 204; 303, 304; 403, 404; 503, 504, 523), wherein said material sections have mutually differing external material properties, and wherein at least one of said sections (3, 4; 103, 104; 203, 204; 303, 304; 403, 404; 503, 504, 523) comprises tissue paper and/or nonwoven material, **characterized in that** said material sections (3, 4; 103, 104; 203, 204; 303, 304; 403, 404; 503, 504, 523) are joined so as to provide said cleaning article (1) with an at least partly tubular structure.

2. Flexible cleaning article according to claim 1, **characterized in that** all of said material sections (3, 4; 103, 104; 203, 204; 303, 304; 403, 404; 503, 504, 523) comprise tissue paper and/or nonwoven material.

3. Flexible cleaning article according to claim 1 or claim 2, **characterized in that** said cleaning article further comprises a liquid-impermeable layer (109) on the inside of said tissue paper and/or said nonwoven material.

4. Flexible cleaning article according to claim 3, **characterized in that** said liquid-impermeable layer (109; 209; 309) comprises a polymeric film underlying said material sections (3, 4; 103, 104; 203, 204; 303, 304).

5. Flexible cleaning article according to claim 3 or claim 4, **characterized in that** said liquid-impermeable layer (109; 209; 309) is attached to at least one of said material sections (3, 4; 103, 104; 203, 204; 303, 304).

6. Flexible cleaning article according to claim 5, **characterized in that** said liquid-impermeable layer (109; 209; 309) is attached to at least one of said material sections (3, 4; 103, 104; 203, 204; 303, 304) by means of adhesive and/or welding.

7. Flexible cleaning article according to any one of the preceding claims, **characterized in that** said material sections (3, 4; 103, 104; 203, 204; 303, 304; 403, 404; 503, 504, 523) have mutually different absorbencies when used for the absorption of the same substance, and/or said material sections exhibit mutually different surface hardness.

8. Flexible cleaning article according to any one of the preceding claims, **characterized in that** a first one of said material sections (3, 4; 103, 104; 203, 204; 303, 304; 403, 404; 503, 504, 523) exhibits a higher absorbency to aqueous-based products than another of said sections.

9. Flexible cleaning article according to any one of the preceding claims, **characterized in that** a first one of said material sections (3, 4; 103, 104; 203, 204; 303, 304; 403, 404; 503, 504, 523) exhibits a rough and abrasive surface, and a second one of said material sections exhibits a soft and smooth surface.

10. Flexible cleaning article according to any one of the preceding claims, **characterized in that** said article is a tube with two open ends (7, 8).

11. Flexible cleaning article according to any one of claims 1 to 9, **characterized in that** said article is a tube with only one open end (108).

12. Flexible cleaning article according to any one of claims 1 to 9, **characterized in that** said article is in the form of a glove with up to five finger-receiving portions (209a; 418-422).

13. Flexible cleaning article according to any one of the preceding claims, **characterized in that** said material sections (3, 4; 103, 104; 203, 204; 303, 304; 403, 404; 503, 504, 523) are positioned one after the other circumferentially around the tubular structure of said article.

14. Flexible cleaning article according to any one of the preceding claims, **characterized in that** said article comprises two major surfaces, each of said major surfaces consisting of one of said material sections (3, 4; 103, 104; 203, 204; 303, 304; 403, 404).

15. Flexible cleaning article according to any one of the preceding claims, **characterized in that** said article is of the type designed for disposal after a single use.
